# EUROPEAN PATENT SPECIFICATION

(11) **EP 3 571 032 B1**
(45) Date of publication and mention of the grant of the patent: **14.07.2021**
(21) Application number: 18702938.4
(22) Date of filing: 19.01.2018
(51) Int. Cl.: B27N 3/18, B65G 47/252, B65G 13/06

(54) **TURNING APPARATUS FOR A COOLING TURNER**
DREHGERÄT FÜR EINEN KÜHLDREHER
APPAREIL DE TOURNAGE POUR UN TOURNEUR DE REFROIDISSEMENT

(30) Priority: 19.01.2017 FI 20175042
(43) Date of publication of application: 27.11.2019
(73) Proprietor: Dieffenbacher Panelboard Oy, 15560 Nastola (FI)
(72) Inventor: MÄNNIKKÖ, Ari, 15561 Nastola (FI)
(74) Representative: Hartdegen, Helmut
(86) International application number: PCT/EP2018/051270
(87) International publication number: WO 2018/134338

(56) References cited:
- EP-A2- 0 457 216
- DE-T5-112015 000 724
- US-A- 1 039 202
- US-A1- 2010 095 792

## Description

The object of the present invention is a system defined in claim 1.

Wood-based boards, such as chipboards, MDF (Medium-Density Fibreboard) boards or OSB (Oriented Strand Board) boards, are manufactured by hot-pressing wood fibers and binder agent into an integral board with a hot press, after which the boards are sawn to the desired lengths, preferably with a moving saw, i.e. without stopping the boards. After this the boards are transported, singly or in stacks of two or more boards, to a cooling turner, in which the boards are cooled before stacking.

A cooling turner is an elongated steel structure having an effective length of typically 4-12 m. The width of the boards is typically 2-4 m and the number of thick boards to be cooled in the turner is 30-60 units.

In the chipboard, MDF board and OSB board industry, a drum-like steel pipe is generally used as the body structure of a cooling turner, onto which pipe the necessary number of flanges are fixed for fastening the radial support prongs. The boards to be cooled are brought into the intervals between the support prongs.

Each board is in the cooling turner for the duration of a turning movement of 180°. The turning movement occurs over the top route, in which case the boards stay in the cooling turner without separate support parts. There can be one or more cooling turners consecutively, in which case the boards are transferred to further processing, or to the next cooling turner and there make a 180° turning movement before removal from the cooling turner.

One cooling turner known in the art is presented in Finnish patent 125432 B.

US1039202A discloses preamble of claim 1.

A cooling turner is turned with a turning apparatus, which is an expensive and technically demanding part. A large-dimension gear rim driven by one or two large parallel shaft gears is generally used in the chipboard, medium-density fibreboard (MDF) and oriented strand board (OSB) industry as a turning apparatus for a cooling turner. Since the gear rim is driven bay at most two drives, it must be fabricated to be large in diameter for producing the torque capacity needed.

The torque needed to turn a cooling turner varies greatly, depending on the dimensions of the boards being manufactured and on the density of the board material. In addition, filling the cooling turner with boards and emptying the cooling turner of boards produces a heavy loading on the turning apparatus. The rhythm of the production line affects the velocity of the turning movement, i.e. its acceleration and deceleration, and therefore dynamic torque.

Owing to these reasons, the static and dynamic torque needed varies greatly. Typically, the total torque is 100-500 kNm in cooling turners of the chipboard, MDF board and OSB board industry.

A problem of prior art is thus the high expense of manufacturing and transporting a large gear rim. At the same time, the solution is not sufficiently modular, because the only option is the use of one or of two parallel shaft geared motors. Furthermore, a typical parallel shaft geared motor in these applications is large and heavy. The weight of one parallel shaft geared motor is generally approx. 1000-1300 kg. The installation of more than two such large parallel shaft geared motors to drive a gear rim suitable for container transportation is difficult, if not impossible, in a typical case.

In prior art, the shaft of the driving wheel of an open gear drive bears both the torque and the bending moment on the output side. For this reason, a parallel shaft geared motor of disadvantageously large size must be selected. When supporting the driving wheel on the output side, the tooth force can never be evenly distributed to the teeth owing to bending. That being the case, the open gear drive must be dimensioned to be larger and thus more expensive to manufacture.

The aim of the current invention is to provide a new type of turning apparatus for a cooling turner, the torque capacity of which apparatus can be appropriately and advantageously adapted to be suitable for each production line. Moreover, the dimensions of the necessary components should be made suitable for container transportation, in which case the parts could be manufactured in a global manufacturing chain in advantageous batch sizes and at an inexpensive price. These objectives are achieved with a system according to claim 1.

One preferred embodiment of the system according to the invention comprises geared motor in form of a planetary geared motor.

Another preferred embodiment of the system according to the invention comprises geared motor in form of a Cyclo-geared motor.

Yet another preferred embodiment of the invention is a system, wherein the input side and the output side of the geared motors are at a right angle to each other.

Some of the advantages of the invention that can be mentioned are that the torque capacity of the cooling turner is advantageously adaptable to be suitable for a certain production line. A modular structure based on a number of small planetary gears, wherein the driving gear wheels are supported on both sides is more advantageous to manufacture than a structure known in the art. Additionally, a geared motor can be standardized, in which case they can be purchased in large batches more cheaply. The delivery time for a standardized geared motor needing a spare part is short.

Likewise, the wheel of an open gear drive can be standardized because the torque class is selected by the number of driving wheels. Gear rims can therefore be manufactured and transported inexpensively in larger series. An open gear rim suitable in diameter for transportation by intermodal container reduces transport costs compared to prior art.

In the following, the invention will be described in more detail by the aid of some preferred embodiments with reference to the attached drawings, wherein
Fig. 1 presents a cooling turner to be used for cooling wood-based boards.
Fig. 2 presents an end view of a cooling turner provided with geared motors.
Fig. 3 presents the idling wheel and the geared motors of the cooling turner as viewed from the end.
Fig. 4 presents a section of Fig. 3 along the line B-B.
Fig. 5 presents the same as Fig. 3, but as viewed obliquely from the side.

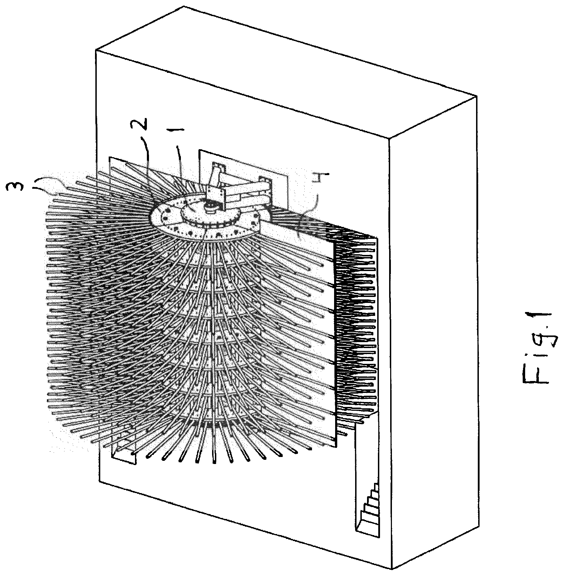

Fig. 1 thus presents a cooling turner of a chipboard, MDF board and OSB board factory, the body of the turner comprising a drum-like center pipe 1 and flanges 2 fastened to it. Support prongs 3 are fastened to the flanges, 8 units of which flanges being fastened consecutively to the center pipe in the embodiment presented by Fig. 1. The distance between flanges is preferably approx. 0.4 - 0.7 m.

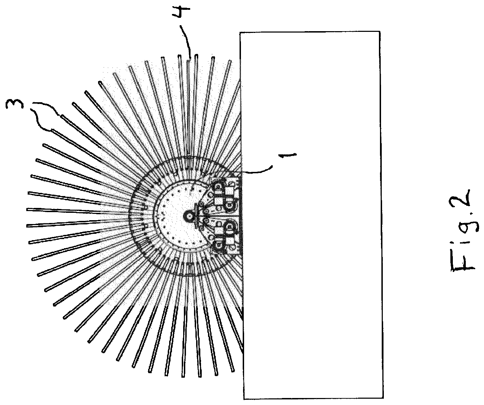

Spaces form in the intervals between support prongs 3, into which spaces the boards 4 to be cooled are fed one at a time or in batches. In this cooling turner the boards are cooled until the cooling turner has rotated 180°, after which the board or boards are removed from the cooling turner. There are generally approx. 70-90 intervals, into which the boards can be fed, in a turning distance of 180°. A cooling turner is stopped always when a board is fed in and/or when a board is removed from the cooling turner. In Fig. 2 the cooling turner is presented as viewed from the end at which the turning apparatus is disposed.

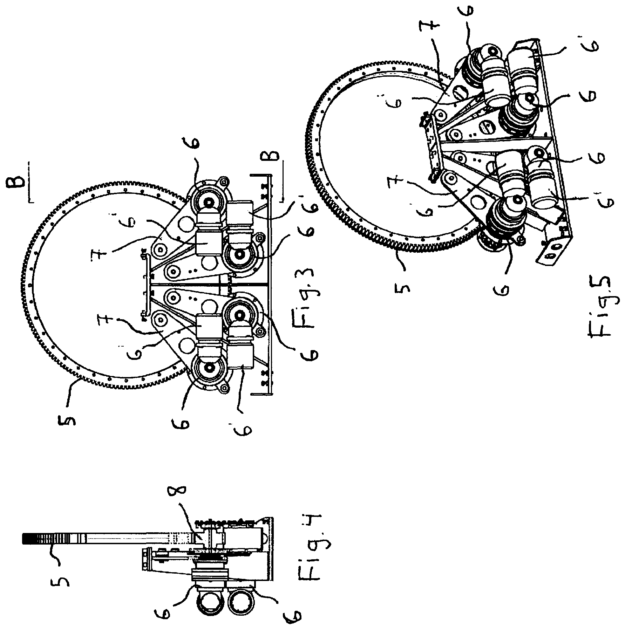

Fig. 3 presents in more detail the turning mechanism of the cooling turner. The diameter of the gear rim 5 of the cooling turner is preferably adapted to be suitable for container transportation, i.e. the largest diameter of it is slightly smaller the inside width of an intermodal container.

Preferably at least three geared motors 6 can be connected to the gear rim 5 for adjusting the torque capacity to the desired level. There are four units of geared motor 6 in the embodiments presented on the figures. The geared motors 6 are essentially more compact than typical parallel shaft gears in the same torque class. The geared motor can be a planetary geared motor or a so-called Cyclo-geared motor.

The input shaft and output shaft of the planetary geared motors 6 are at essentially a right angle to each other and thus the electric motors 6' of these gears do not significantly lengthen the space required by the whole apparatus in the longitudinal direction of the production line. Since the input shaft and the output shaft are at a right angle to each other, the geared motors 6 can be installed overlapping with the adjacent geared motor for achieving the most compact structure possible when the electric motors 6' are on an essentially horizontal plane.

Rotation of the planetary gears 6 is prevented with torque arms 7 of sufficient length, which are pointed compactly towards the center axis of the cooling turner. Thus, the radial load on the output side of the gear produced by the torque decreases and also the other dimensions of the structure remain a small as possible.

In Fig. 4 it is seen that the driving gear wheels 8 of the open gear drive are mounted on bearings on both sides of a toothing, so that the tooth forces are distributed as evenly as possible and a bending moment is not exerted on the output side on the shaft of the gearwheel 8.

When the driving gear wheel 8 is mounted on bearings on both sides separately, the geared motor 6, typically a planetary geared motor, can be dimensioned on the basis of the torque required. In this way, the geared motor 6 is smaller and cheaper than in a case in which it would have to also bear the tooth forces arising from the bending moment on the drive shaft.

An inexpensive and compact geared motor 6 is easily replaceable, if necessary, because it can be detached while the driving gear wheel remains on its bearings and while the tooth meshing remains unchanged.

It is obvious to the person skilled in the art that the invention is not limited to the embodiments described above, but that it can be varied within the scope of the claims presented below.

## Claims

1. System comprising a cooling turner and a turning apparatus for turning a cooling turner adapted to cool wood-based boards (4) or board stacks, which cooling turner comprises a gear rim (5) adapted to turn the turning cooler, **characterized in that** at least three geared motors (6) are arranged to rotate the gear rim (5), and that torque arms (7), which are pointed essentially towards the center axis of the cooling turner, are arranged on the geared motors (6), and that driving gear wheels (8) of the geared motors (6), said driving gear wheels (8) being in connection with the gear rim (5), are mounted on bearings on both sides of a toothing.

2. System according to claim 1, **characterized in that** the geared motor (6) is a planetary geared motor.

3. System according to claim 1, **characterized in that** the geared motor (6) is a Cyclo-geared motor.

4. System according to any of claims 1-3, **characterized in that** the input side and the output side of the geared motors (6) are at a right angle to each other.

## Patentansprüche

1. System, umfassend einen Kühlwender und eine Wendevorrichtung zum Wenden eines Kühlwenders, der dafür eingerichtet ist, Holzwerkstoffplatten (4) oder -plattenstapel zu kühlen, wobei der Kühlwender einen Zahnkranz (5) umfasst, der dafür eingerichtet ist, den Kühlwender zu wenden,
**dadurch gekennzeichnet,**
**dass** wenigstens drei Getriebemotoren (6) angeordnet sind, um den Zahnkranz (5) zu drehen, und
**dass** Drehmomentarme (7), die im Wesentlichen auf die Mittelachse des Kühlwenders ausgerichtet sind, an den Getriebemotoren (6) angeordnet sind, und
**dass** Antriebszahnräder (8) der Getriebemotoren (6), wobei die Antriebszahnräder (8) in Verbindung mit dem Zahnkranz (5) stehen, an Lagern auf beiden Seiten einer Verzahnung angeordnet sind.

2. System nach Anspruch 1, **dadurch gekennzeichnet, dass** der Getriebemotor (6) ein Planetengetriebemotor ist.

3. System nach Anspruch 1, **dadurch gekennzeichnet, dass** der Getriebemotor (6) ein Zyklo-Getriebemotor ist.

4. System nach einem der Ansprüche 1 bis 3, **dadurch gekennzeichnet, dass** die Eingangsseite und die Ausgangsseite der Getriebemotoren (6) im rechten Winkel zueinander stehen.

## Revendications

1. Système comprenant un tourneur de refroidissement et un appareil de tournage pour faire tourner un tourneur de refroidissement adapté pour refroidir des planches à base de bois (4) ou des empilements de planches, lequel refroidisseur à tournage comprend une couronne dentée (5) adaptée pour faire tourner le refroidisseur à tournage,
**caractérisé en ce qu'**au moins trois moteurs à engrenages (6) sont agencés pour mettre en rotation la couronne dentée (5), et **en ce que** des bras de torsion (7), qui sont orientés essentiellement vers l'axe central du tourneur de refroidissement, sont agencés sur les moteurs à engrenages (6), et **en ce que** des roues dentées motrices (8) des moteurs à engrenages (6), lesdites roues dentées motrices (8) étant en raccordement avec la couronne dentée (5), sont montées sur des paliers des deux côtés d'une denture.

2. Système selon la revendication 1, **caractérisé en ce que** le moteur à engrenages (6) est un moteur à engrenages planétaires.

3. Système selon la revendication 1, **caractérisé en ce que** le moteur à engrenages (6) est un moteur à engrenages cycloïdaux.

4. Système selon l'une quelconque des revendications 1 à 3, **caractérisé en ce que** le côté entrée et le côté sortie des moteurs à engrenages (6) sont à angle droit l'un par rapport à l'autre.
